# EUROPEAN PATENT APPLICATION

(11) **EP 1 932 783 A1**
(43) Date of publication of application: **18.06.2008**
(21) Application number: 07122427.3
(22) Date of filing: 05.12.2007
(51) Int. Cl.: B65G 47/08, B65G 47/71, B65G 47/82

(54) **Manipulator group and process for apportioning and arranging objects of varying type and size**

(30) Priority: 12.12.2006 IT MI20062382
(71) Applicant: OCME S.r.l., 43100 Parma (IT)
(72) Inventor: Gatteschi, Emanuele, 43100 Parma (IT)
(74) Representative: Fusina, Gerolamo

(57) **Abstract**

Manipulator group (10) for apportioning and arranging objects of varying type and size (11), fed in a plurality of parallel rows (15) staggered according to a fixed pitch in every row (15) along a work flow (F), in which the manipulator group (10) comprises a conveyor belt (18) and a manipulator device (19) translating in a plane above said conveyor belt (18), in which the manipulator device (19) comprises at least one thin flat element (20) extending vertically fixedly connected in a top portion (21) to perpendicular guides (22, 23) arranged above the conveyor belt (18), the at least one flat element (20) comprising two opposite side surfaces (24, 24') parallel to the work flow (F) and being able to be actuated to come into contact laterally on one of said opposite side surfaces (24, 24') with a predetermined object (11) to push it, as it moves forwards, perpendicularly to the work flow from the row (15) on which it moves forwards to another row (15) in a predetermined free portion of the conveyor belt (18).

## Description

The present invention refers to a manipulator group and to a process for apportioning and arranging objects of varying type and size.

To apportion and arrange objects of varying type and size, such as primary packaging like for example various single products, i.e. bottles, cans, bags, packets, boxes, etc. or else such as secondary packaging like cartons containing objects, i.e. crates, bundles, "clusters", "twin packs", etc. automatic machines and/or special processes are used that tend to speed up operations. The aforementioned types of products to be arranged on pallets, to make things easier, are indicated hereafter as "objects" or else "object of varying type and size".

In general, the objects are fed by conveyor belts and the like, which make the individual object of varying type and size move forward, one after the other along many rows, towards areas of a machine that achieves the desired arrangement according to different methods.

Up to now various machines and processes have been developed that in a more or less complex way reduce or increase the number of rows on which the objects move forwards.

Known machines have production speeds that may now be judged inadequate to achieve ever-increasing productivity and that have problems of various types. For example, to try to increase such productivity, it has been thought of to combine special manipulator groups such as belts with transversal rods equipped with sliding blocks that, picking up an object travelling over it, move it transversally at another row, with the feed rows, which are moreover dependent and that must interact according to pitches and times simultaneously in any case slowing down the end result.

Various solutions have been developed for moving the sliding blocks, which in any case constitutes a serious drawback for the required speeds.

A further disadvantage lies in the fact that it is necessary to stop a feed row in order to reduce the number of rows.

The purpose of the present invention is to make a manipulator group and a process for apportioning and arranging objects of varying type and size capable of solving the aforementioned drawbacks of the prior art in an extremely simple, cost-effective and particularly functional way.

Another purpose is to make a manipulator group and a process for apportioning and arranging objects of varying type and size that ensures that the objects are arranged through a manipulator group outside of the conveyor belt.

Another purpose is to be able to have a manipulator group and a process for apportioning and arranging objects of varying type and size that ensures a greater production than devices known today.

A further purpose is to be able to work different types and models of grouping/balancing (see models shown) flexibly by just changing the software program.

These purposes according to the present invention are accomplished by making a manipulator group and a process for apportioning and arranging objects of varying type and size as outlined in the independent claims.

Further characteristics of the invention are outlined in the dependent claims.

The characteristics and advantages of a manipulator group and a process for apportioning and arranging objects of varying type and size according to the present invention shall become clearer from the following description, given as a non-limiting example, referring to the attached schematic drawings, in which:
figure 1 is a side view of a manipulator group for apportioning and arranging objects of varying type and size according to the present invention;
figure 2 is a view from above of the manipulator group for apportioning and arranging objects of varying type and size of figure 1;

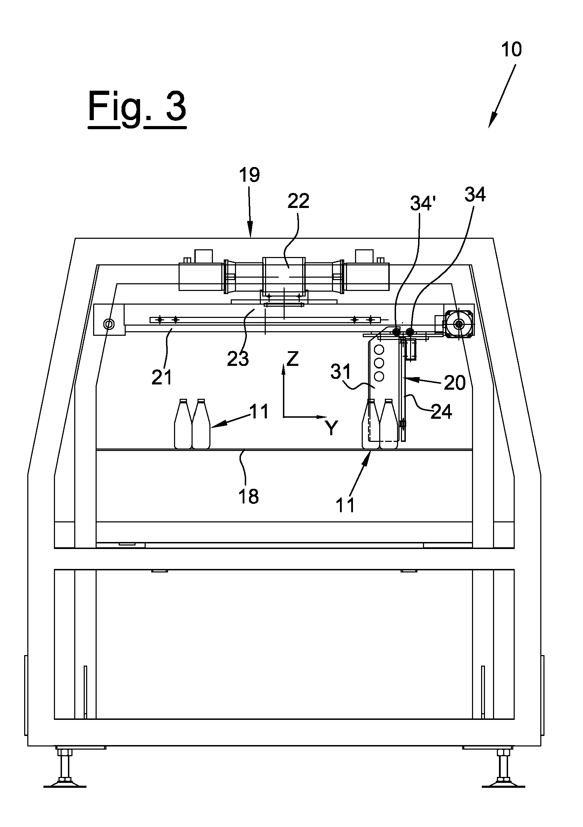

figure 3 is a schematic section view of the manipulator group for apportioning and arranging objects of varying type and size of figure 2 along the line III-III;

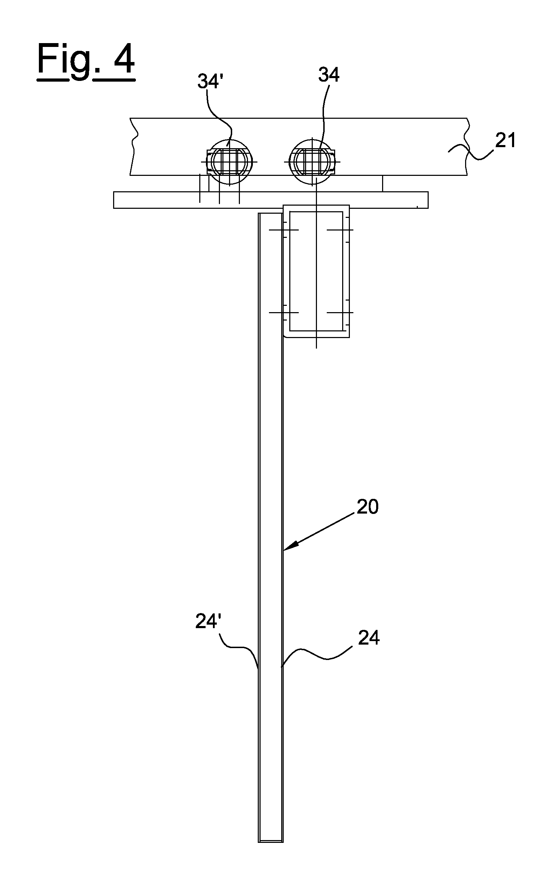

figure 4 is a front view of a component of the manipulator group for apportioning and arranging objects of varying type and size of figure 3;

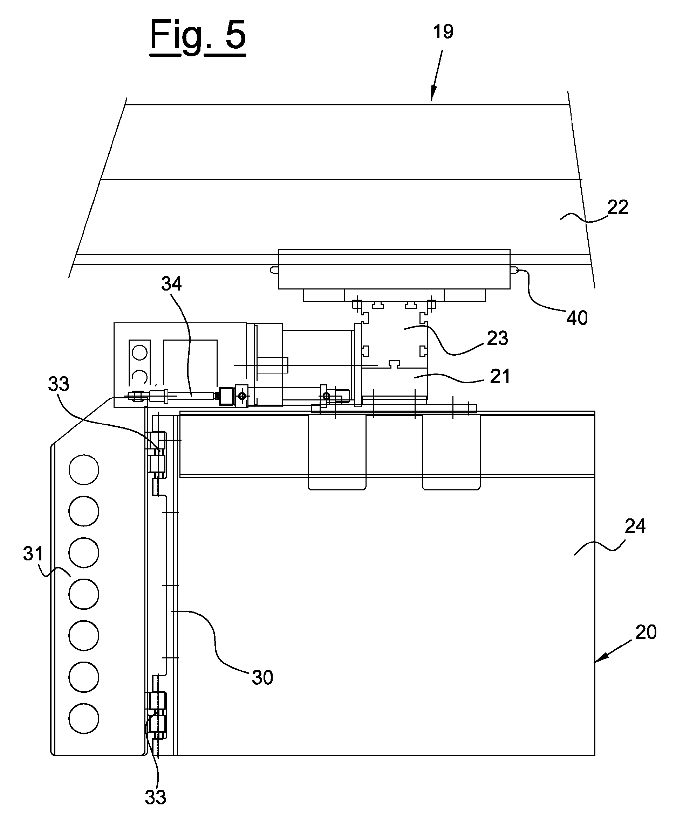

figure 5 is a side view of the component of figure 4; figures 6 and 7 are schematic views from above of some operating steps of the manipulator group according to the present invention to respectively apportion and arrange different types of objects; and
figures 8 and 9 are schematic views from above of some operating steps of the manipulator group according to the present invention in the case in which objects are fed that do not need to be manipulated.

With reference to the figures, a manipulator group for apportioning and arranging objects of varying type and size is shown wholly indicated with 10.

Such a manipulator group 10 apportions and arranges objects of varying type and size 11, coming from many feed lines (not shown), according to a plurality of parallel rows 15.

By the term objects of varying nature and size 11 we mean primary packaging like for example various single products, i.e. bottles, cans, bags, packets, boxes, etc. or else such as secondary packaging like cartons containing more than a single product, i.e. crates, bundles, "clusters", "twin packs", etc.

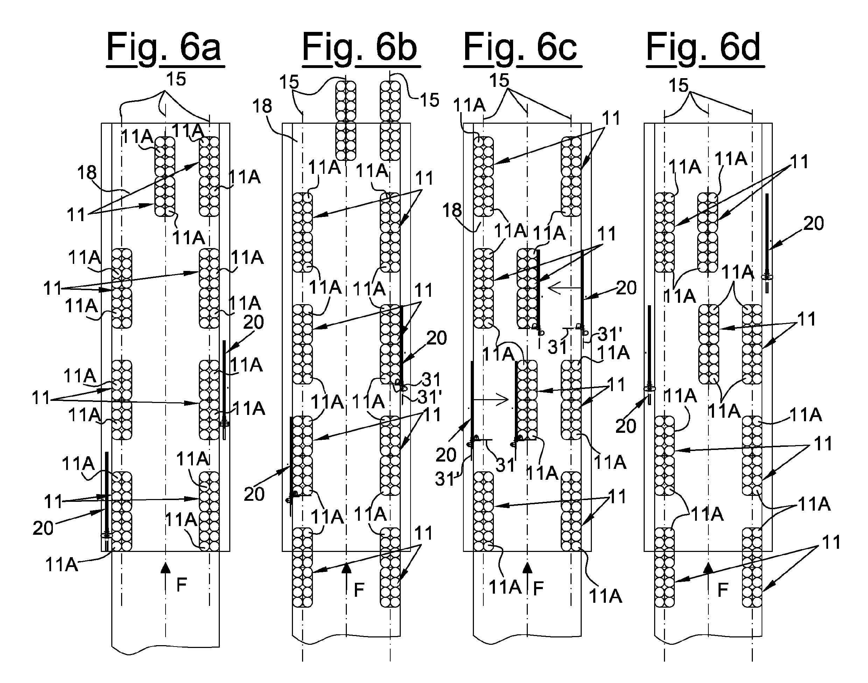

The aforementioned manipulator is also able to move batches of packaging as if they were one, as shown in the examples of figures 6-7 where the objects 11 consist of groups of crates of cans of various shapes and sizes.

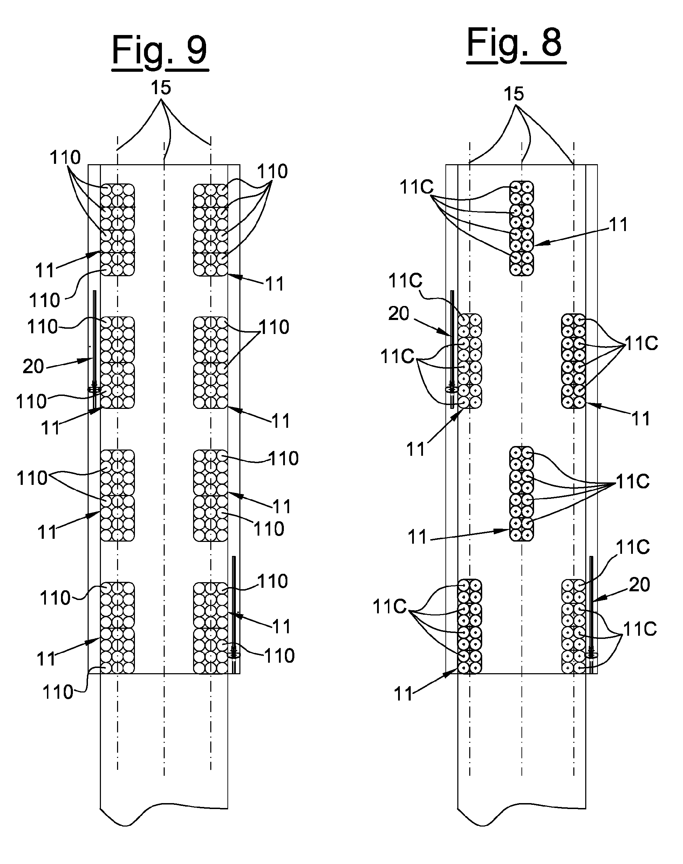

Figures 6-7 show examples of operation of the group 10 with objects 11 respectively consisting of two crates 11A, each comprising cans arranged in two rows and four lines, and of four crates 11B, each comprising cans arranged in three rows and two lines. Figures 8-9, respectively, show crates 11C, comprising cans arranged in two rows and two lines, and crates 11D comprising cans arranged in three rows and four lines that travel through the group without being manipulated.

The examples shown, for indicating and not limiting purposes, allow the secondary packaging to be arranged at the outlet of the group 10 according to a configuration suitable for forming a standard palletization state, which for cans consists of 6 rows and 4 lines of cans.

Of course, other types of crates or primary packaging can also be foreseen to be arranged according to different configurations.

According to whether the manipulator group 10 is fed with one or the other type of crates, for example those quoted above, it has to perform special operations in order to arrange them along a given number of rows 15 that may be greater than, less than or equal to the feed rows.

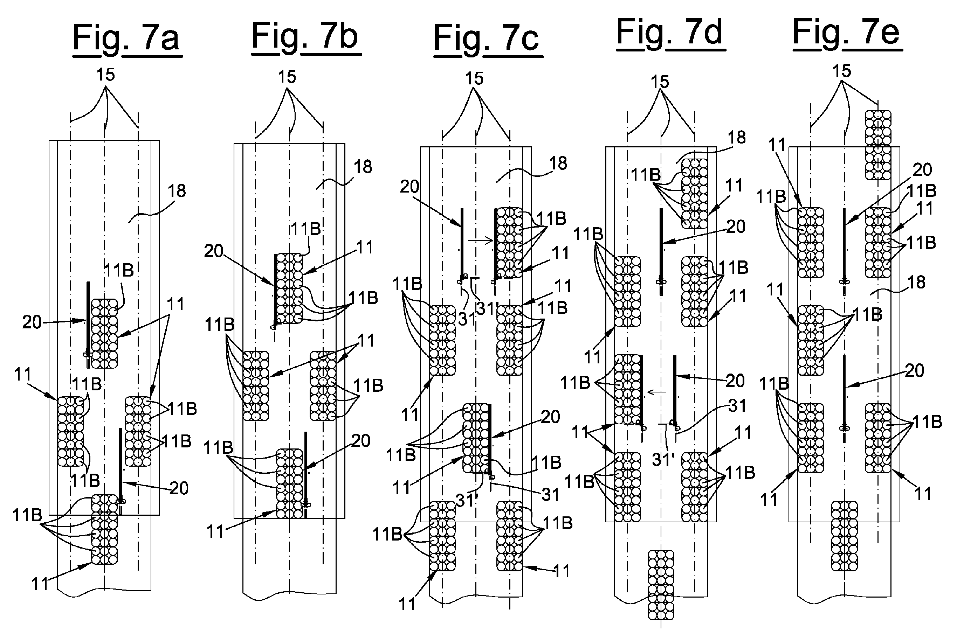

In particular, in the case in which crates of type 11A are fed along two rows 15, figure 6, the manipulator group 10 creates a third advancing row 15. If crates of type 11B are fed along three rows 15, figure 7, the group 10 eliminates the central row 15; finally, in the case in which crates of type 11C and 11D are respectively fed along three and two rows 15, figures 8 and 9, the group 10 does not perform any operation leaving the rows unchanged.

Such objects of varying shape and size 11, are fed, as already stated earlier and by means of known machine groups, staggered and so that in each row 15 it has a predetermined pitch along a work flow F.

By the term pitch we mean a predetermined distance between the objects moving forwards in succession on the same row 15.

The feeling with a pitch is for example achieved by arranging, upstream of the manipulation group 10, a selection group (not object of the present invention, comprising a plurality of channels equipped with electronic selectors using pins to stagger the objects 11 according to the selected pitch, and a thrusters group, for example comprising mechanical tines, suitable for ensuring the correct positioning with a pitch of the objects 11.

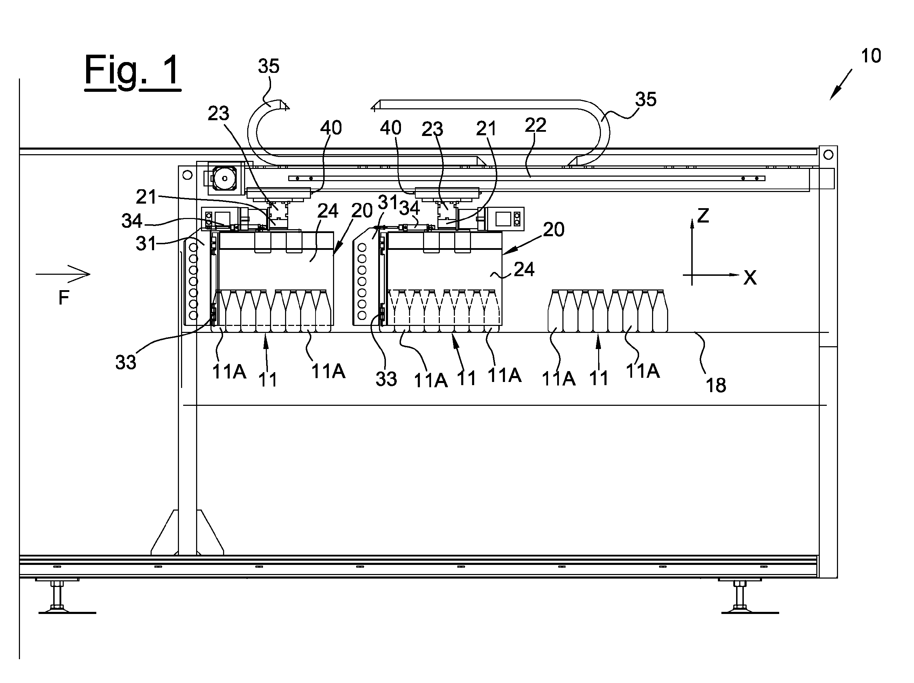

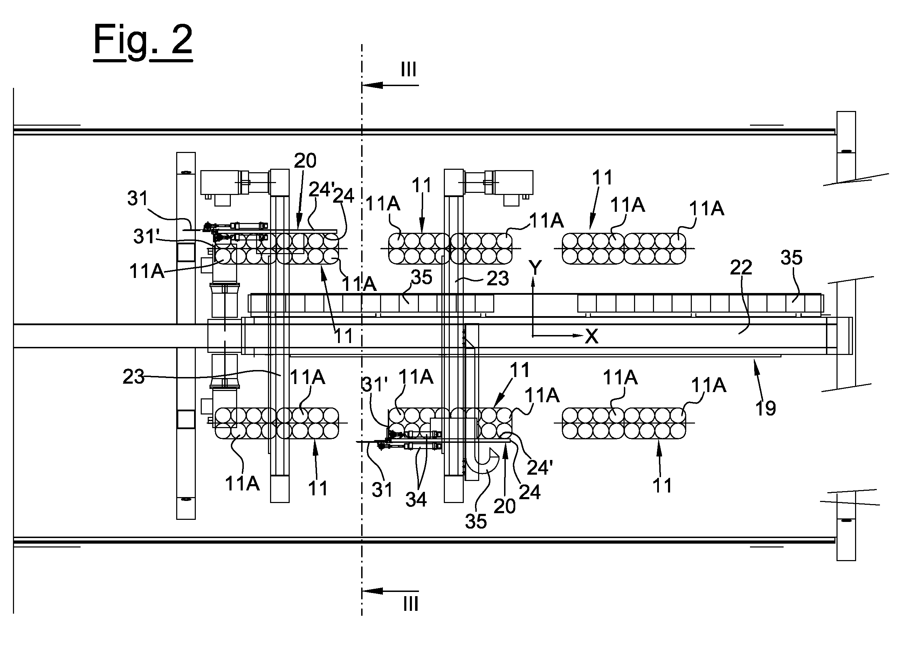

The manipulator group 10 comprises a conveyor belt 18 with constant speed and a manipulator device 19 that translates along the direction parallel and perpendicular to the work flow F that coincide with the directions X and Y of the Cartesian axis shown in figures 1 and 2. Such a manipulator device 19 does not perform movements along the direction Z.

The manipulator device 19 according to the invention comprises at least one thin flat element 20 extending vertically that is fixedly connected in a top portion 21 to perpendicular guides, a longitudinal guide 22 and a transversal guide 23 arranged above the conveyor belt 18.

The thin flat element 20 comprises two side surfaces 24, 24' opposite one another and parallel to the work flow F.

Such a flat element 20 can be actuated to come into contact laterally, through simultaneous movements along the aforementioned directions X and Y.

According to whether moving in one direction or the other along the transversal guide 23 to which it is directly connected, the flat element 20 comes into contact with a predetermined object 11 with one of the two side surfaces 24, 24'.

Once this contact has been made the flat element 20 pushes such a predetermined object 11, which moves forward on board the belt 18 along X, in direction Y perpendicular to the work flow from the row 15 on which it moves forwards onto another row 15 in a predetermined free portion of the conveyor belt 18.

By the term predetermined object 11 we mean an object that in order to meet the requirements of subsequent processing should occupy a certain row that is different from the one in which it moves forwards.

According to a preferred embodiment shown in the figures, the perpendicular guides 22, 23 are made up of a longitudinal guide 22 arranged in central position along the entire length of the conveyor belt 18 and two transversal guides 23, able to move in series on such a longitudinal guide 22.

The at least one thin flat element 20 is able to move on each transversal guide 23.

In this case optical means 40 are also foreseen to detect the distance between the two transversal guides 23 arranged in series in order to avoid them possibly knocking one another or the flat elements 20 as they move on the common longitudinal guide 22.

It is also possible to foresee a single transversal guide 23 able to move in the longitudinal guide 22.

According to another embodiment (not shown) the perpendicular guides can be made from two longitudinal guides arranged at the opposite sides of the conveyor belt along the entire length and in each of which at least one transversal guide can move.

In this configuration a thin flat element 20 can also move on each transversal guide 23, as described previously.

In this second example there can also be more than one transversal guide 23 able to move on the two longitudinal guides 22 arranged at the side in the belt 18 and, to avoid them knocking, optical means 40 can be foreseen to detect their distance.

Advantageously according to the invention each thin flat element 20 can be connected, in a rear portion thereof, to a tab 31, also thin an extending vertically, through at least one hinge 33. The tab 31 is able to move from a position in which it is aligned with the relative thin flat element 20, to another in which it always forms an angle of 90° with it through a rotary movement that can be controlled by a secondary power unit 34, for example pneumatic.

According to another embodiment shown two rotary tabs 31, 31' are foreseen and in this case one tab 31 rotates in the opposite direction to the other 31' from a position in which they are both aligned with the relative thin flat element 20 to another in which at least one tab 31 or 31' forms an angle of 90° with respect to the side surface 24 or 24' worked upon.

The remaining mobile elements that make up the manipulator group 10, i.e. the transversal guides 23 and the thin flat elements 20, can be controlled by two independent primary power units 35, 35'.

Such two independent primary power units 35, 35' can use a belt, a rack, advancing with a screw, or else they can for example be pneumatic.

Finally, the thin flat elements 20 can advantageously be made from a light material, for example honeycombed aluminium, to make it easier to move them by reducing their inertia.

It is absolutely easy to understand the operation of the device object of the finding.

The manipulator group 10 according to the present invention apportions and arranges objects of varying type and size 11 along a work flow F according to what has been described.

The aforementioned objects of varying type and size 11 are fed on a conveyor belt 18 in a plurality of parallel rows 15 and staggered according to a fixed pitch.

At this point a manipulator device 19 acts upon a predetermined object 11 moving forwards on the conveyor belt 18, pushing it perpendicularly to the work flow from the row 15 on which the predetermined object 11 moves forward onto another row 15 in a predetermined free portion.

This lateral pushing step in particular comprises the following steps.

Initially, the thin flat element 20 follows a predetermined object 11 moving along the direction X at a greater speed than the belt 18.

Once the predetermined object 11 has been reached, the thin flat element 20 goes alongside it and continues at the same speed as the belt 18.

Then it proceeds to rest at the side of the latter with one of the quoted side surfaces 24 or 24' performing a transversal translation movement along Y at the same time as the forward movement along X.

In this position, if the predetermined object 11 is not perfectly aligned or slightly late or early with respect to the thin plane 20, it can proceed to compact it through a small acceleration along X, through the tab 31 or 31' rotated to collaborate with the rear surface of the predetermined object 11.

Once this ideal contact configuration has been reached, the thin flat element 20 proceeds to push the predetermined object 11 laterally in direction Y onto another row 15 in a predetermined free portion at the same time as it moves forwards along X.

Once the translation of the object 11 has been completed, the plane 20 releases the side surface of the predetermined object 11 performing a translation movement along Y to go into an outer position of the belt 18 or else in the space between two rows of objects, and then slowing down to a return movement along X.

The plane 20 is thus positioned aligned with a second predetermined object to proceed to a second movement, analogous to what has been described.

According to the examples of operation shown in figures 6a-d and 9 and in figures 7a-e and 8 the objects 11 are fed on the conveyor belt 18 respectively in two and in three parallel rows 15 staggered according to a fixed pitch.

In the example of figures 6a-d the manipulator device 19 is shown comprising two thin flat elements 20 that, in one step follow two predetermined objects 11 along X, figure 6a; then they hook onto the objects 11 as they move forwards with a movement Y that matches the forward movement along X, figure 6b.

Then, the objects 11 are pushed laterally along Y in a third central free row 15 with a further movement Y that matches the forward movement along X, figure 6c. Once this movement has occurred, the manipulator device 19 moves away along Y whereas it decelerates along X and then inverts its motion and proceeds to follow new predetermined objects 11 along X, figure 6d.

The example of figures 7a-7e is totally analogous apart from that the objects 11 are fed on the conveyor belt 18 in three parallel rows 15 and their lateral movement can occur, within such three rows 15 from a side row to the central one or vice-versa according to the predetermined free portion of the conveyor belt 18.

It has thus been seen that a manipulator group and process for apportioning and arranging objects of varying type and size according to the present invention achieves the purposes outlined previously.

Indeed, advantageously such a manipulator group allows the number of rows on which the objects move forwards to be increased, reduced or left unchanged in a quick and simple manner.

The manipulator group and the process for apportioning and arranging objects of varying type and size of the present invention thus conceived can undergo numerous modifications and variants, all of which are covered by the same inventive concept.

Moreover, in practice the materials used, as well as their sizes and components, can be whatever according to the technical requirements.

## Claims

1. Manipulator group (10) for apportioning and arranging objects of varying type and size (11), fed in a plurality of parallel rows (15) staggered according to a fixed pitch in each of said rows (15) along a work flow (F), wherein said manipulator group (10) comprises a conveyor belt (18) and a manipulator device (19) translating in a plane above said conveyor belt (18), in which said manipulator device (19) comprises at least one thin flat element (20) extending vertically fixedly connected in a top portion (21) to perpendicular guides (22, 23) arranged above said conveyor belt (18), said at least one flat element (20) comprising two opposite side surfaces (24, 24') parallel to said work flow (F) and being able to be actuated to come into contact laterally on one of said opposite side surfaces (24, 24') with a predetermined object (11) to push it, as it moves forwards, perpendicularly to the work flow from the row (15) on which it is moving forwards to another row (15) in a predetermined free portion of said conveyor belt (18).

2. Manipulator group (10) according to the previous claim **characterised in that** said perpendicular guides (22, 23) comprise at least one longitudinal guide (22) along the entire length of said conveyor belt (18) and at least one transversal guide (23) able to move on said longitudinal guide (22) on which said at least one thin flat element (20) can move.

3. Manipulator group (10) according to the previous claim **characterised in that** it comprises a longitudinal guide (22) arranged at the centre of said conveyor belt (18) and at least two transversal guides (23) able to move in series.

4. Manipulator group (10) according to the previous claim **characterised in that** it comprises optical means (40) for detecting the distance between said at least two transversal guides (23) arranged in series.

5. Manipulator group (10) according to claim 2 **characterised in that** a rear end (30) of said at least one thin flat element (20) is connected to at least one tab (31) also thin, extending vertically and able to move from a position in which it is aligned with another in which it forms an angle of 90° with said at least one thin flat element (20).

6. Manipulator group (10) according to the previous claim **characterised in that** comprises two tabs (31, 31') rotating in opposite directions from a position aligned with another in which at least one forms an angle of 90° with said at least one thin flat element (20).

7. Manipulator group (10) according to the previous claim **characterised in that** said connection between said at least one thin flat element (20) and said relative tab (31, 31') is made through at least one vertical hinge (33) for the rotation about a vertical axis of said relative tab (31, 31') with respect to said at least one thin flat element (20).

8. Manipulator group (10) according to the previous claim **characterised in that** the movement of said tab (31, 31') with respect to said at least one thin plane (20) is controlled by a pneumatic secondary power unit (34).

9. Manipulator group (10) according to claim 2 **characterised in that** the movement of said at least one transversal guide (23) and the movement of said at least one flat element (20) on the relative transversal guide (23) are controlled by two independent primary power units.

10. Manipulator group (10) according to the previous claim **characterised in that** said two independent primary power units have a belt drive (35, 35').

11. Manipulator group (10) according to any one of the previous claims **characterised in that** said at least one thin flat element (20) is made from light honeycombed materials.

12. Method for apportioning and arranging objects of varying type and size (11) along a work flow (F) comprising the following steps:
- continuously feeding said objects of varying type and size (11) on a conveyor belt (18) at constant speed according to a plurality of parallel rows (15) staggered according to a fixed pitch in each of said rows (15);
- arranging, through a manipulator device (19), a predetermined object (11), as it moves forwards, with a movement perpendicular to said work flow F from the row (15) on which it moves forwards onto another row (15) in a predetermined free portion of said conveyor belt (18),
wherein said step of arranging said predetermined object (11) comprises the cyclical steps of:
- placing a manipulator device (19) in contact with the side surface of said predetermined object (11) as it moves forwards said manipulator device (19) performing a simultaneous translation movement perpendicular and parallel to the direction of said work flow (F);
- laterally pushing said predetermined object (11) on said other row (15) in a predetermined free portion of said conveyor belt (18) through a simultaneous translation movement of said manipulator device (19) perpendicular and parallel to the direction of said work flow (F)
- releasing the contact with the side surface of said predetermined object (11), said manipulator device (19) performing a translation movement along the direction perpendicular to said work flow (F).

13. Method according to claim 12 **characterised in that** said step of coming into contact comprises the steps of:
- following said predetermined object (11) with said manipulator device (19) performing a translation movement along the direction of said work flow (F) at a higher speed than the speed of said belt (18);
- resting on the side of said predetermined object (11) with said manipulator device (19) performing a simultaneous translation movement perpendicular and parallel to the direction of said work flow (F).

14. Method according to claim 13+ **characterised in that** said step of resting on the side comprises the compacting step in which said manipulator device (19) comes into contact through a tab (31, 31') transversal with the rear surface of said predetermined object (11) and accelerates along the direction of said work flow (F).

15. Method according to claim 12 **characterised in that** said step of releasing the contact with said side surface of said predetermined object (11) comprises the steps of:
- moving away from said predetermined object (11) with said manipulator device (19) performing a translation movement perpendicular to the direction of said work flow (F) at the same time as a decelerated translation movement in direction parallel to said work flow (F);
- stopping in a predetermined free portion of said conveyor belt (18).
